Europäisches Patentamt

European Patent Office

Office européen des brevets

(11) Veröffentlichungsnummer: **0 166 455**
**A1**

## (12) EUROPÄISCHE PATENTANMELDUNG

(21) Anmeldenummer: 85108055.6

(22) Anmeldetag: 28.06.85

(51) Int. Cl.⁴: **F 16 B 13/08**

(30) Priorität: **28.06.84 DE 3423805**

(43) Veröffentlichungstag der Anmeldung: **02.01.86**
**Patentblatt 86/1**

(84) Benannte Vertragsstaaten: **AT CH FR GB IT LI NL SE**

(71) Anmelder: **Zondler, Sylvia, Bergstrasse 28,
D-7424 Heroldstatt (DE)**

(72) Erfinder: **Zondler, Sylvia, Bergstrasse 28,
D-7424 Heroldstatt (DE)**

(74) Vertreter: **Patentanwälte Phys. Bartels Dipl.-Ing. Fink
Dr.-Ing. Held, Lange Strasse 51, D-7000 Stuttgart 1 (DE)**

(54) **Schlagdübel.**

㊸ Bei einem Schlagdübel ist in einer längsgeschlitzten Hülse
(2) ein Nasenbolzen (1) derart bewegbar, dass seine Nase (4) in
einem Längsschlitz (6) gleitet und auf der Planfläche einer
Scheibe aufliegt, wodurch eine Zwangsspreizung erreicht wird.

ACTORUM AG

2. April 1985 /37
P 6970

## "Schlagdübel"

Die Erfindung hat sich die Aufgabe gemacht einen einfachen Dübel für harte Körper wie Stein, Beton etc. zu entwickeln, der mit bloßen Hammerschlägen gesetzt werden kann.

Auf dem Nasenbolzen 1 sitzt die längsgeschlitzte Hülse 2, auf dieser Hülse lagert die Unterlagscheibe 3. Die Hülse 2 weist einen derart breiten Schlitz 6 auf entsprechend dem Schnitt B-B, daß die Nase 4 des Bolzens 1, entsprechend Schnitt A-A, hineinragen kann. Beim Eintreiben der Hülse 2 über den Konus 5 des Bolzens 1 entsteht eine Zwangsspreizung, die dem Dübel auch in der Zugzone des Betons einen sicheren Halt gewährt.

2

2. April 1985 /37
P 6970

Sylvia Zondler, Bergstraße 28, 7424 Heroldstatt

A n s p r u c h

Schlagdübel, dadurch g e k e n n z e i c h n e t, daß sich in einer längsgeschlitzten Hülse (2) ein Nasenbolzen (1) so bewegt, daß seine Nase 4 in dem Längsschlitz 6 gleitet und auf der Planfläche der Scheibe 3 aufliegt, wodurch die Zwangs-spreizung erreicht wird.

Fig.1

Fig. 3

Fig. 2

Europäisches
Patentamt

**EUROPÄISCHER RECHERCHENBERICHT**

0166455
Nummer der Anmeldung

EP 85 10 8055

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-U-1 794 393 (SOCIETE DES FORGES ET BOULONNERIES HERMANT HICGUET ET D'ARS-SUR-MOSELLE) * Figur 1 * | 1 | F 16 B 13/08 |
| Y | DE-U-6 936 677 (FISCHER) * Figur 1 * | 1 | |
| Y | DE-U-8 219 793 (TOGE-DÜBEL A. GERHARD) * Figur 5 * | 1 | |
| Y | DE-B-1 949 196 (ETEM ETS. DE TECHNIQUES MODERNES) * Figur 3 * | 1 | |
| Y | DE-A-2 922 126 (ALBERT BERNER) * Figur 1 * | 1 | RECHERCHIERTE SACHGEBIETE (Int. Cl.4) F 16 B 13/00 |
| Y | DE-A-3 151 660 (HILTI) * Figur 1 * | 1 | |
| Y | AT-B- 19 763 (LAKHOVSKY) * Figur 14 * | 1 | |
| Y | GB-A-2 100 823 (HILTI) * Figur 1 * | 1 | |

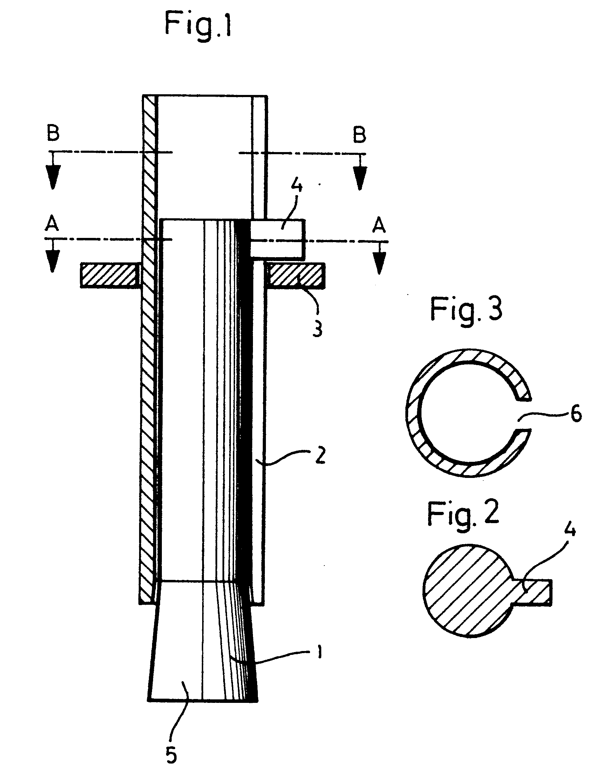

Der vorliegende Recherchenbericht wurde für alle Patentansprüche erstellt.

| Recherchenort BERLIN | Abschlußdatum der Recherche 30-08-1985 | Prüfer ZAPP E |
|---|---|---|